# FASCICULE DE BREVET EUROPEEN

(11) **EP 1 117 199 B1**
(45) Date de publication et mention de la délivrance du brevet: **27.02.2008**
(21) Numéro de dépôt: 01400062.4
(22) Date de dépôt: 11.01.2001
(51) Int. Cl.: H04B 10/17

(54) **Régénération 3R d'un signal optique**
3R-Regenerierung eines optischen Signals
3R-regeneration of an optical signal

(30) Priorité: 12.01.2000 FR 0000338
(43) Date de publication de la demande: 18.07.2001
(73) Titulaire: Alcatel Lucent, 75008 Paris (FR)
(72) Inventeur: Janz, Christopher, 92130 Issy-les Moulineaux (FR); Guerber, Patricia, 91210 Draveil (FR); Lavigne, Bruno, 92160 Antony (FR); Wolfson, David, Building 349, 2800 Lyngby (DK); Fjelde, Tina, Building 349, 2800 Lyngby (DK); Kloch, Allan, Building 349, 2800 Lyngby (DK)
(74) Mandataire: Korakis-Ménager, Sophie

(56) Documents cités:
- EP-A- 0 849 622
- US-A- 5 781 326
- US-A- 5 999 283
- SPIEKMAN L H ET AL: "ALL-OPTICAL MACH-ZEHNDER WAVELENGTH CONVERTER WITH MONOLITHICALLY INTEGRATED PREAMPLIFIERS" IEEE PHOTONICS TECHNOLOGY LETTERS,US,IEEE INC. NEW YORK, vol. 10, no. 8, 1 août 1998 (1998-08-01), pages 1115-1117, XP000769874 ISSN: 1041-1135
- RAYBON G ET AL.: "20 Gbit/s all-optical regeneration and wavelength conversion using SOA based interferometers" OPTICAL FIBER COMMUNICATION CONFERENCE, 1999, AND THE INTERNATIONAL CONFERENCE ON INTEGRATED OPTICS AND FIBER COMMUNICATION. OFC/IOOC'99. TECHNICAL DIGEST, vol. 4, 21 - 26 février 1999, pages 27-29, XP002147998

## Description

### Domaine de l'invention

L'invention se situe dans le domaine des circuits de régénération d'un signal optique de transmission d'informations. Elle est applicable aux transmissions dont le code est ou n'est pas avec retour à zéro.

### Art antérieur

Il est connu d'employer des interféromètres dont les bras comportent des amplificateurs optiques à semi-conducteur pour réaliser des fenêtres de décision. Ces interféromètres qui utilisent une source d'onde continue constituant l'onde porteuse de sortie peuvent être utilisés dans une configuration en opposition de phase (out of phase) ou en phase, tel que dans le brevet US 5,999,283.

Lorsqu'ils sont utilisés en opposition de phase, une bonne non linéarité est obtenue et donc une bonne remise en forme. Cependant, dans ce cas, on réduit la capacité du signal transformé à supporter les déformations des impulsions de signal apportées par la ligne (bonnes qualités de chirp), quand de la fibre standard est employée.

Lorsqu'ils sont utilisés en phase la capacité du signal transformé à résister aux déformations des impulsions du signal est améliorée, mais la non linéarité est réduite.

Un interféromètre, dont les bras comportent des amplificateurs optiques à semi-conducteur, peut aussi être utilisé en conjonction avec un signal d'horloge reconstitué. Dans ce cas, en particulier quand le convertisseur est utilisé en opposition de phase une bonne régénération 3R est obtenue. Les capacités du signal transformé à résister aux déformations en ligne restent bonnes à la condition que les impulsions d'horloge aient une durée courte par rapport à la durée de chacune des impulsions constituant, ensemble, le signal à transmettre.

### Brève description de l'invention

L'emploi d'interféromètres dont les bras comportent des amplificateurs optiques à semi-conducteur, que ce soit en phase ou en opposition de phase, ne permet pas d'obtenir de bonnes caractéristiques de fenêtre de décision avec un seul interféromètre. les capacités du signal obtenu à résister aux déformations en ligne, ne sont pas assez bonnes pour un usage direct en tant qu'émetteur.

Des architectures multi-étages sont donc inévitables avec l'emploi des techniques connues. De plus, ces solutions de reconstitution ne sont pas nécessairement les plus pratiques ou les plus performantes pour l'insertion ultérieure d'un séquencement (timing) par introduction d'un signal d'horloge.

La version avec récupération d'horloge, bien que supérieure du point de vue de la fenêtre de décision et de la capacité à résister aux déformations d'impulsions, présente cependant, un autre inconvénient.

Comme le signal d'horloge sert directement d'onde de transmission, la capacité de résistance aux déformations d'impulsions (chirp) peut ne pas être satisfaisante. Elle est dépendante du débit de transmission et du dispositif employé pour récupérer l'horloge. La longueur d'onde de transmission est aussi fixée par la source de l'horloge. De plus le signal d'horloge peut avoir un rapport signal sur bruit faible.

La présente invention est destinée à remédier à ces inconvénients. Elle vise notamment à réaliser un dispositif capable de régénérer 3R, un signal dont le débit peut atteindre 40 gigabits par seconde et au-delà. Elle vise aussi à concilier une bonne fenêtre de décision, une faible déformation des impulsions en lignes tout en diminuant le nombre de composants nécessaires.

A toutes ces fins, l'invention vise un dispositif pour régénérer un signal optique d'entrée modulé en amplitude par impulsions selon la revendication 1.

### Brève description des dessins

Un exemple de réalisation d'un dispositif, selon l'invention, et des résultats de transmission de signal au travers d'un tel dispositif seront maintenant expliqués et commentés en liaison avec les dessins annexés dans lesquels :
- la figure 1, représente schématiquement un dispositif selon l'invention ;
- les figures 2 et 3, sont des diagrammes destinés à expliquer le fonctionnement de l'invention ;
- la figure 4, représente un dispositif expérimental destiné à tester l'invention ;
- la figure 5 comporte les parties A, B, C et D. Les parties A et B représentent respectivement la trace du signal à régénérer et son diagramme d'oeil ;
- les parties C et D, représentent la trace du signal régénérée par le dispositif selon l'invention et son diagramme d'oeil ;
- la figure 6, représente deux courbes représentant chacune le taux d'erreurs sur bit pour le signal à régénérer et pour le signal régénéré respectivement ;
- la figure 7, représente des courbes représentant chacune le taux d'erreurs sur bit pour le signal à régénérer, le signal régénéré et pour ce même signal régénéré après transmission sur une fibre mode unique standard de 31 km ;
- la figure 8 représente le diagramme d'oeil du signal régénéré transmis.
- la figure 9 représente une variante de réalisation du circuit selon l'invention représenté figure 1.

### Description d'un mode de réalisation de l'invention.

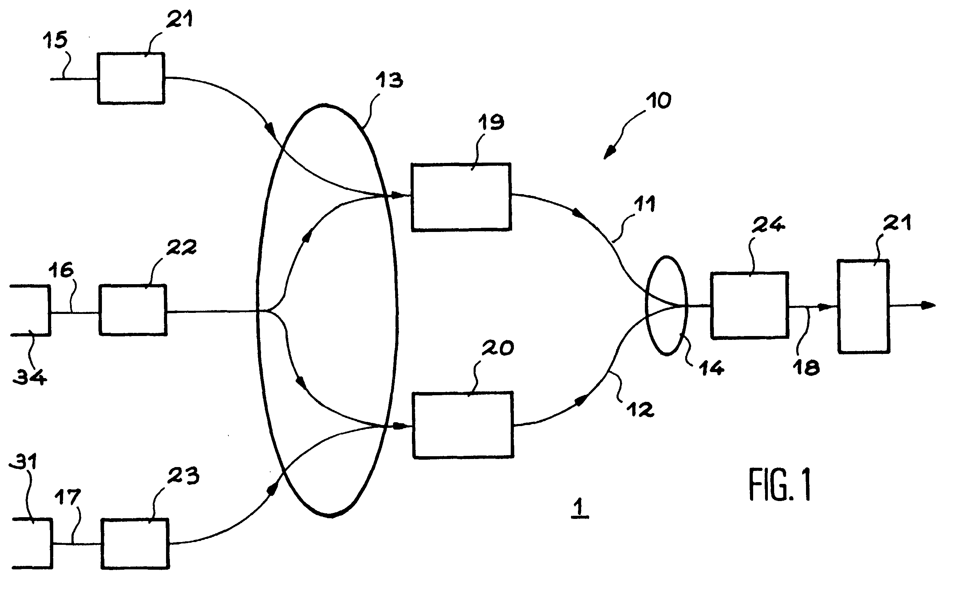

Un premier mode de réalisation de l'invention sera maintenant commenté en liaison avec la figure 1.

Le circuit de régénération 1 comprend une structure interférométrique 10, par exemple de Mach-Zehnder, comprenant un premier bras 11 et un second bras 12. Des moyens 13 de couplage d'entrée couplent le premier bras 11 à des guides, par exemple, des fibres optiques 15 et 16. Les moyens de couplage 13 couplent le second bras 12 au guide 16 d'une part, et à un guide 17, par exemple, une fibre optique.

Des moyens de couplage de sortie 14 couplent chacun des bras 11, 12 à un guide de sortie 18.

Chacun des bras 11, 12 comporte un amplificateur optique à semi-conducteur, 19, 20, respectivement. Le guide de sortie 18 alimente un filtre passe bande 21 dont la sortie constitue la sortie du dispositif 1 selon l'invention.

Le bras 16 est couplé à un générateur d'une onde continue 34, et le bras 17 à un générateur d'un signal d'horloge du signal à régénérer, de préférence un récupérateur d'un tel signal.

De façon optionnelle, chacun des guides d'entrée 15-17 et le guide de sortie 18, peuvent comprendre des amplificateurs optiques par exemple, à semi-conducteur, 21-23 et 24 respectivement, destinés à adapter le niveau des différents signaux.

Le fonctionnement est le suivant :

Le guide 15 reçoit le signal à régénérer. Le guide 16 reçoit l'onde optique continue non modulée en provenance du générateur d'onde continue 34. Le guide 17 reçoit un signal d'horloge en provenance du générateur de signal d'horloge 31, générant de préférence un signal d'horloge reformé à partir du signal à régénérer. Les guides 15 et 16 alimentent le premier bras 11.

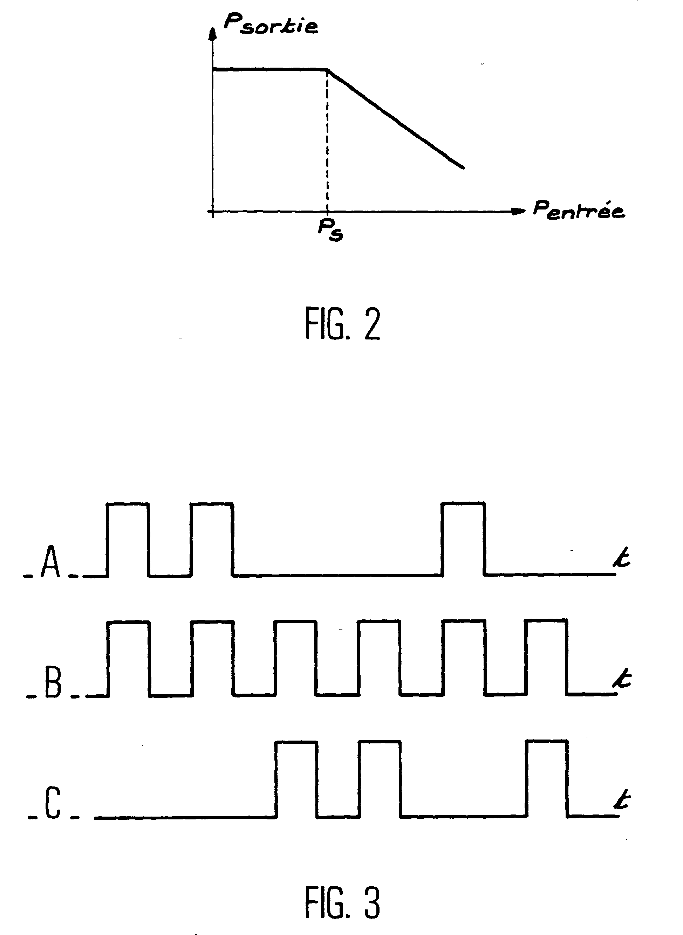

Le milieu 19 présente une puissance optique de sortie constante tant que la puissance d'entrée est inférieure à un seuil puis décroissante au-dessus de ce seuil. La courbe représentative de la puissance optique d'entrée est représentée figure 2.

Le niveau de puissance de l'onde continue est réglé au moyen de l'amplificateur 22 pour être à un niveau voisin ou supérieur au niveau d'entrée Ps à partir duquel la puissance de sortie diminue.

Dans ces conditions, cette onde continue est après son passage dans le milieu 19 modulée en puissance par le niveau de puissance reçu par le bras 11 en provenance du guide 15. L'onde en sortie du milieu 19 du bras 11 est donc modulée par le signal présent sur le bras 15.

Un exemple d'une telle modulation est représenté schématiquement en partie A de la figure 3.

Dans les mêmes conditions, l'onde continue entrée sur le bras 12 est modulée par le signal d'horloge reçu sur ce même bras en provenance du guide 17.

Ainsi, l'onde continue présente en sortie du milieu 20 sensible à la puissance optique reçue présente l'aspect du signal d'horloge représenté en partie B de la figure 3.

La polarité statique de l'interféromètre 10 est choisie de telle sorte que la puissance de sortie de l'onde continue est annulée, lorsqu'il n'y a pas de déphasage dynamique entre les bras 11, 12. On se situe dans la même situation que pour une conversion de longueur d'onde "en phase". On ne peut donc avoir une sortie à 1 que si l'horloge et le signal diffèrent, produisant ainsi un déphasage dynamique entre les deux bras de l'interféromètre. Ceci ne peut se produire que pour une valeur 0 du signal.

Par interférence destructive au niveau du coupleur 14, les ondes continues présentes sur chacun des bras 11, 12, s'annulent lorsque les bras présentent un même déphasage dynamique et sont conservées chaque fois que les déphasages dynamiques de chacun des bras sont différents. Ainsi, un bit de sortie à 1 ne peut être obtenu que lorsque le signal d'entrée présente un 0.

Le dispositif 1, selon l'invention, réalise ainsi une opération logique ou exclusif entre le signal d'horloge et le signal à régénérer en même temps qu'une conversion en longueur d'onde.

Après filtrage, au travers du filtre passe-bande 21, centré sur la longueur d'onde de l'onde continue présente sur le guide d'entrée 16, le signal présent en sortie du dispositif 1, selon l'invention présente l'aspect représenté en partie C de la figure 3.

Il s'agit d'un signal dont la polarité par rapport au signal d'entrée est inversée, c'est-à-dire que les 1 et 0 du signal d'entrée sont transformés en 0 et 1 respectivement du signal de sortie.

Le fait que la conversion soit effectuée "en phase" a pour résultat une meilleure capacité du signal de sortie à résister aux déformations d'impulsions dues aux écarts de fréquence en ligne (chirp) dans le cas d'une transmission sur de la fibre standard, ou sur de la fibre où la dispersion nette est dans le même sens que sur la fibre standard. L'utilisation d'une entrée d'horloge sur l'un des bras procure un accroissement de la vitesse de conversion du signal. Le fait d'effectuer une conversion de la fréquence porteuse du signal garantit une sortie ayant un bon rapport signal/bruit, et efface toute caractéristique spectrale potentiellement gênante du signal d'horloge reconstitué. A noter également, que la longueur d'onde de sortie peut être librement choisie.

Il convient de noter que la régénération est bien 3R puisque les impulsions de sortie sont bien reformées (reshaping) réamplifiées, et resynchronisées (retiming). La resynchronisation en particulier provient du fait qu'une sortie à la valeur 1 obtient sa forme et sa synchronisation à partir des impulsions à la valeur 1 du signal d'horloge.

Il convient de remarquer également que la polarité initiale du signal à régénérer peut être retrouvée par passage du signal de sortie dans un second dispositif selon l'invention. Dans un tel cas, on utilisera de préférence le même signal d'horloge que celui présent sur le guide 17.

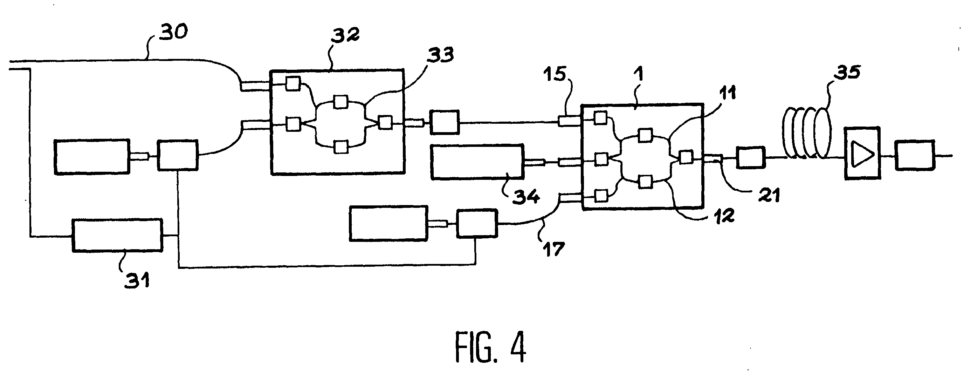

Les résultats obtenus au moyen d'un dispositif 1 selon l'invention seront maintenant commentés en liaison avec les figures 4 à 7.

La figure 4 représente un montage expérimental destiné à alimenter un dispositif 1 selon l'invention et à faire des mesures sur les signaux traités.

Ce montage sera commenté succinctement.

A gauche de la figure un guide 30, par exemple une fibre optique, reçoit un signal pseudo aléatoire représentatif d'une transmission de données.

Un dispositif 31 de récupération du signal d'horloge extrait le signal d'horloge du signal et délivre le signal d'horloge récupéré d'une part au guide 17 du circuit 1 et d'autre part à un circuit 32 destiné à changer la polarité du signal pseudo-aléatoire initial présent sur le guide 30.

On notera au passage que ce circuit 32 est représentatif d'un exemple de circuit de régénération d'un signal utilisé comme mentionné dans le paragraphe relatif à l'art antérieur en conjonction avec un signal d'horloge reconstitué.

Ce circuit 32 comporte essentiellement une structure interférométrique 33 dont un bras reçoit le signal en provenance du guide 30 et le signal d'horloge.

Le second bras reçoit le signal d'horloge récupéré.

Chacun des bras comporte des amplificateurs optiques à semi-conducteur. Le niveau du signal d'horloge introduit dans chacun des bras est tel que ces amplificateurs fonctionnent dans la partie décroissante de la courbe représentant la puissance de sortie en fonction de la puissance d'entrée.

Le signal en sortie du circuit 32 est un signal régénéré ayant une polarité inverse du signal d'entrée et dont la fréquence porteuse est la fréquence porteuse du signal d'horloge récupéré.

Le signal de polarité inversée est introduit dans le bras 11 du dispositif 1. Chacun des bras 11, 12 du circuit 1 reçoit une onde laser continue en provenance d'une source 34 alimentant le guide 16 du dispositif 1.

En sortie du dispositif 1, le signal présent est de même polarité que le signal pseudo-aléatoire alimentant le guide 30. Ce signal passe au travers d'une fibre optique 35, qui dans les expériences effectuées par la demanderesse avait une longueur de 31 km.

Les mesures sont effectuées sur le signal en sortie du dispositif 1 et sur le signal après traversée de la fibre 35.

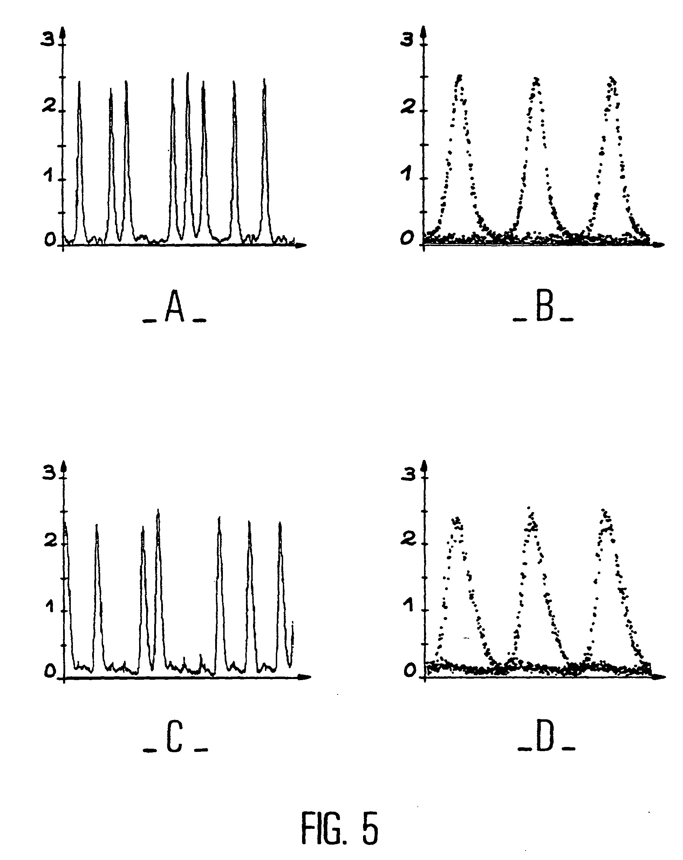

La figure 5 parties A et C qui montrent l'intensité en mV du signal à régénérer et régénéré respectivement en fonction du temps en pico secondes montrent une bonne conservation du signal. De même, la figure 5 parties B et D qui montrent le diagramme d'oeil des signaux à régénérer et régénéré respectivement ne montrent pas de rétrécissement sensible de la plage temporelle dans laquelle une décision peut être prise.

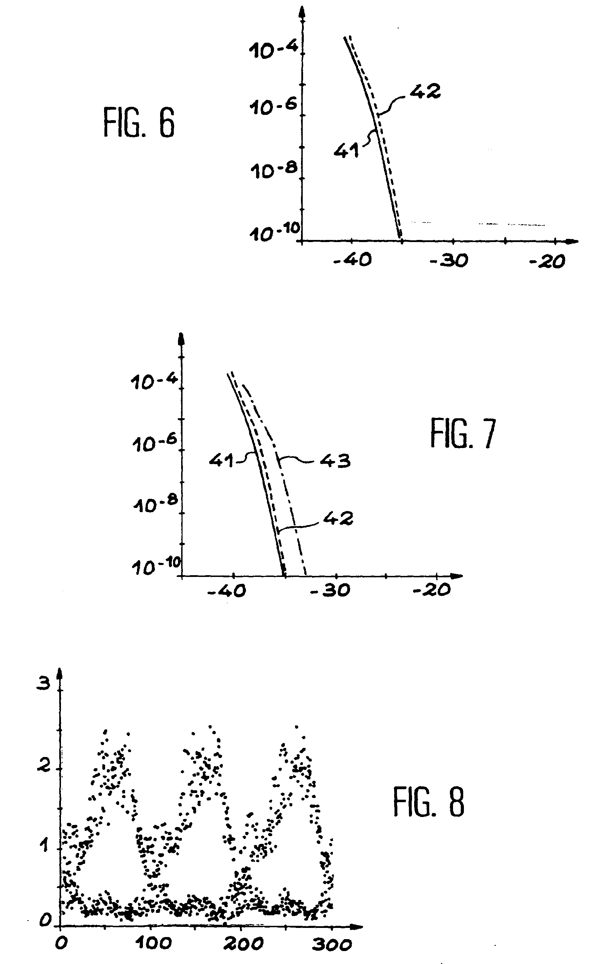

La figure 6 montre le taux d'erreurs sur bit en fonction de la puissance reçue exprimée en dBm (décibels de mW). Le taux pour le signal à régénérer est représenté par une courbe 41 et par une courbe 42 pour le signal régénéré. Les pertes de sensibilité (pénalités) sont quasiment négligeables pour une conversion à 10 gigabits par seconde.

La capacité de transmission du signal régénéré est illustrée par les courbes représentées sur les figures 7 et 8. En plus, des courbes 41 et 42 représentées figure 6, on a représenté une courbe 43, représentant le taux d'erreurs sur bit après une transmission en ligne de 31 km.

La pénalité de transmission est de 1,8 décibels, donc du même ordre de grandeur que la pénalité pour la transmission sur cette longueur d'un signal non régénéré.

Le diagramme d'oeil représenté figure 8 confirme ces bonnes qualités de transmission, qui s'apparentent à ce qu'on peut obtenir avec un signal régénéré en phase.

Des précisions sur les diagrammes d'oeil et la transmission numérique sont connus par exemple du manuel de A. COZANNET et al "Optique et communications" éditions EYROLLES et CNET ENST 1983, notamment le chapitre 15.

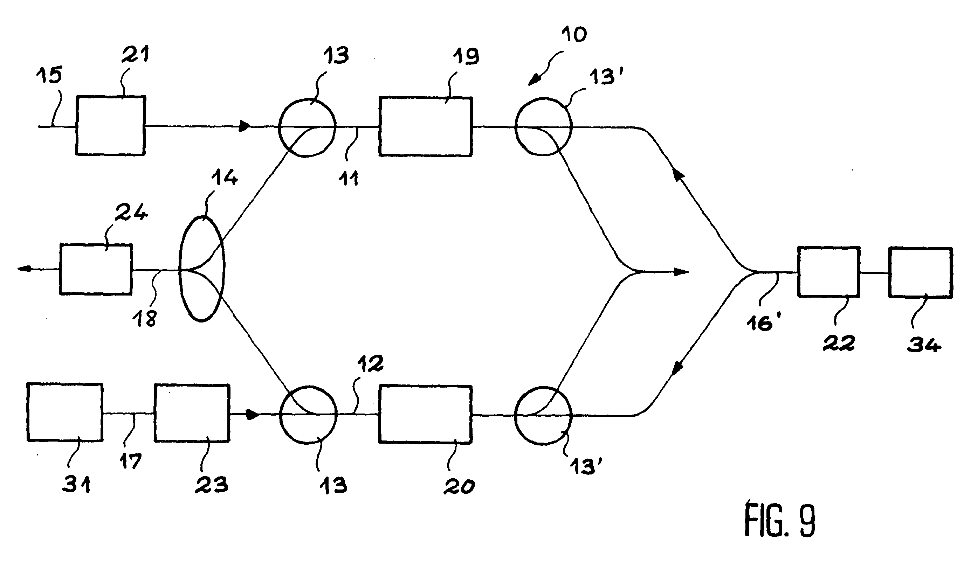

Une variante de réalisation du dispositif selon l'invention dans laquelle le filtre 21, n'est pas nécessaire sera maintenant décrite en relation avec la figure 9.

Le filtre 21, n'est pas nécessaire si, comme représenté figure 9, l'onde continue est introduite dans les bras 11 et 12 de l'interféromètre à une extrémité de ces bras opposée à celle par laquelle sont introduits sur ces bras le signal à régénérer et le signal d'horloge respectivement. Sur la figure 9, des moyens de couplage d'entrée 13 couplent respectivement, comme décrit en relation avec la figure 1, le signal optique d'entrée en provenance du bras 15 au bras 11 et le signal d'horloge au bras 12. Ces signaux sont couplées à une première extrémité de chacun de ces bras. Sur la figure 9 une seconde extrémité de chacun de ces bras est couplée par des moyens de couplage d'entrée 13' à la source 34 de génération d'une onde continue, en sorte que l'onde continue voyage en sens inverse du signal à régénérer et du signal d'horloge.

## Revendications

1. Dispositif (1) pour régénérer un signal optique d'entrée modulé en amplitude par impulsion, le dispositif comportant une structure (10) interférométrique ayant un premier (11) et un second (12) bras, un milieu optique (19,20) non linéaire étant présent sur chacun des bras (11, 12), des moyens (13) de couplage d'entrée couplés auxdits premier (11) et second (12) bras, des moyens de couplage (14) de sortie couplés auxdits premier (11) et second (12) bras et adapté à délivrer un signal d'interférence entre des signaux provenant du premier (11) et du second (12) bras respectivement, la structure interférométrique (10) étant telle que sa sortie est nulle lorsqu'il n'y a pas de déphasage dynamique entre les deux bras (11, 12), les moyens de couplage (14) de sortie couplant la deuxième extrémité du premier bras (11) et la deuxième extrémité du second bras (12) à un conduit (18) porteur du signal optique d'entrée régénéré, dispositif **caractérisé en ce que** les moyens (13, 13') de couplage d'entrée couplent en outre :
- un conduit (16, 16') porteur d'une onde optique continue et un conduit (15) porteur d'un signal optique modulé en amplitude à régénérer à une première extrémité du premier bras (11), et
- ledit conduit (16, 16') porteur de ladite onde optique continue et un conduit (17) porteur d'un signal d'horloge du signal à régénérer à une première extrémité du second bras (12).

2. Dispositif selon la revendication 1, **caractérisé en ce que** les milieux optiques (19,20), sensibles à la puissance optique les traversant, sont constitués par des amplificateurs optiques à semi-conducteur.

3. Dispositif selon l'une des revendications 1 ou 2, **caractérisé en ce qu'**un conduit (15-18), au moins, raccordé aux moyens (13, 13') de couplage d'entrée ou aux moyens (14) de couplage de sortie, comporte un amplificateur optique (21-24).

4. Dispositif selon la revendication 2, **caractérisé en ce que** des moyens (22) de réglage de niveau de puissance optique sont présents entre le générateur (34) d'une onde continue et chacun des bras (11, 12), ces moyens (22) de réglage étant adaptés à ajuster le niveau de l'onde continue à un niveau proche d'un niveau de saturation de chacun des amplificateurs optiques (19, 20) à semi-conducteur présents sur chacun des bras (11, 12) de la structure interférométrique.

## Claims

1. Device (1) for regenerating an input pulse amplitude modulated optical signal, the device comprising an interferometric structure (10) having a first (11) and a second (12) arm, a nonlinear optical medium (19, 20) being present on each of the arms (11, 12), an input coupling means (13) coupled to said first (11) and second (12) arms, an output coupling means (14) coupled to said first (11) and second (12) arms and adapted to deliver an interference signal between signals coming from the first (11) and second (12) arm respectively, with the interferometric structure (10) such that its output is null when there is no dynamic phase shift between the two arms (11, 12), the output coupling means (14) coupling the second end of the first arm (11) and the second end of the second arm (12) to a guide (18) carrying the regenerated input optical signal, a device **characterized in that** the input coupling means (13, 13') also couple:
- a guide (16, 16') carrying a continuous optical wave and a guide (15) carrying an amplitude modulated optical signal to be regenerated to a first end of the first arm (11), and
- said guide (16, 16') carrying said continuous optical wave and a guide (17) carrying a clock signal from the signal to be regenerated to a first end of the second arm (12).

2. Device according to claim 1, **characterized in that** the optical media (19, 20), sensitive to the optical power passing through them, comprise semi-conductor optical amplifiers.

3. Device according to one of claims 1 or 2, **characterized in that** at least one guide (15-18), connected to the input (13, 13') coupling means or output (14) coupling means, comprises an optical amplifier (21-24).

4. Device according to claim 2, **characterized in that** optical power level setting means (22) are present between the continuous wave generator (34) and each of the arms (11, 12), these setting means (22) being adapted to adjust the continuous wave level to a level close to saturation level of each of the se.mi-conductor optical amplifiers (19, 20) present on each of the arms (11, 12) of the interferometric structure.

## Patentansprüche

1. Vorrichtung (1) zur Regenerierung eines optischen Eingangssignals mit Pulsamplitudenmodulation, wobei die Vorrichtung eine interferometrische Struktur (10) einschließt, die einen ersten (11) und einen zweiten (12) Arm enthält, wobei ein nicht lineares optisches Medium (19, 20) auf jedem dieser Arme (11, 12) vorhanden ist, Mittel (13) zur Eingangskopplung, die an diesen ersten (11) und diesen zweiten (12) Arm gekoppelt sind, Mittel zur Ausgangskopplung (14), die an diesen ersten (11) und diesen zweiten (12) Arm gekoppelt sind, und passend sind, um ein Interferenzsignal abzugehen zwischen Signalen, die vom ersten (11) beziehungsweise vom zweiten (12) Arm herkommen, wobei die interferometrische Struktur (10) dergestalt ist, dass ihr Ausgang null ist, wenn keine dynamische Phasenverschiebung zwischen den beiden Armen (11, 12) besteht, wobei die Ausgangskopplungsmittel (14) das zweite Ende des ersten Arms (11) und das zweite Ende des zweiten Arms (12) an eine Leitung (18) koppeln, die Träger des regenerierten optischen Eingangssignals ist, Vorrichtung, die **dadurch gekennzeichnet ist, dass** die Mittel zur Eingangskopplung (13, 13') außerdem folgendes koppeln:
- eine Leitung (16, 16'), die Träger einer ungedämpften optischen Welle ist, und eine Leistung (15), die Träger eines zu regenerierenden amplitudenmodulierten optischen Signals ist, an ein erstes Ende des ersten Arms (11), und
- diese Leitung (16, 16'), die Träger dieser ungedämpften optischen Welle ist, und eine Leitung (17), die Träger eines Taktsignals des zu regenerierenden Signals ist, an ein erstes Ende des zweiten Arms (12).

2. Vorrichtung gemäß Anspruch 1, **dadurch gekennzeichnet, dass** die optischen Medien (19, 20), die gegenüber der sie durchquerenden optischen Leistung empfindlich sind, aus optischen Halbleiterverstärkern bestehen.

3. Vorrichtung gemäß einem der Ansprüche 1 oder 2, **dadurch gekennzeichnet, dass** mindestens eine Leitung (15-18), die an die Eingangskopplungsmittel (13, 13') oder an die Ausgangskopplungsmittel (14) angeschlossen ist, einen optischen Verstärker (21-34) einschließt.

4. Vorrichtung gemäß Anspruch 2, **dadurch gekennzeichnet, dass** Mittel (22) zur Regelung des optischen Leistungspegels zwischen dem Generator (34) einer ungedämpften Welle und jedem der Arme (11, 12) vorhanden sind, wobei diese Mittel (22) zur Regelung angepasst sind, um den Pegel der ungedämpften Welle auf einen Pegel einzustellen, der einem Sättigungspegel jeweils der optischen Halbleiterverstärker (19, 20), die auf jedem der Arme (11, 12) der interferometrischen Struktur vorhanden sind, nahe kommt.
